# EUROPEAN PATENT APPLICATION

(11) **EP 4 691 632 A1**
(43) Date of publication of application: **11.02.2026**
(21) Application number: 24797298.7
(22) Date of filing: 02.04.2024
(51) Int. Cl.: B01J 23/78, B01J 35/61, B01J 37/10

(54) **CATALYST FOR METHANE REFORMING AND MANUFACTURING METHOD THEREOF**

(30) Priority: 28.04.2023 KR 20230055932
(71) Applicant: Hanwha Solutions Corporation, Jung-gu Seoul 04541 (KR); Korea Advanced Institute of Science and Technology, Daejeon 34141 (KR)
(72) Inventor: BAE, Junemin, Daejeon 34128 (KR); CHUN, Jeong Hwan, Daejeon 34128 (KR); KIM, Yeongmin, Daejeon 34141 (KR); CHOI, Minkee, Daejeon 34141 (KR)
(74) Representative: Berggren Oy
(86) International application number: PCT/KR2024/004221
(87) International publication number: WO 2024/225637

(57) **Abstract**

The purpose of the present invention is to provide a nickel catalyst and a manufacturing method thereof, and more specifically, to provide: a structurally stable, highly dispersed nickel catalyst that may be used in methane reforming reaction using carbon dioxide; and a manufacturing method thereof. Provided is a nickel catalyst containing highly dispersed nickel and having excellent structural stability during methane reforming reaction, thus exhibiting excellent catalytic performance in methane reforming reactions using carbon dioxide.

## Description

### [TECHNICAL FIELD]

### CROSS-REFERENCE TO RELATED APPLICATION(S)

This application claims the benefits of Korean Patent Applications No. 10-2023-0055932 filed on April 28, 2023 with the Korean Intellectual Property Office, the disclosure of which is incorporated herein by reference in its entirety.

The present invention relates to a catalyst for methane reforming and manufacturing method thereof. In particular, the present invention relates to a highly dispersed nickel catalyst with secured structural stability that may be used in a methane reforming reaction using carbon dioxide, and a manufacturing method thereof.

### [BACKGROUND OF ART]

As the increasing concentration of carbon dioxide in the atmosphere causes various problems, leading to active research efforts aimed at converting carbon dioxide into useful substances. Among such efforts, a methane reforming reaction using carbon dioxide is a reaction in which carbon dioxide and methane are reacted with a catalyst at a high temperature to produce industrially useful synthesis gas, for example, a mixture of hydrogen and carbon monoxide. The obtained synthesis gas has the advantage that it may be directly applied to reactions for synthesizing various chemicals or hydrocarbons. However, despite these advantages, commercialization is difficult because the catalyst for the reforming reaction is unstable and has low activity.

In addition, since a methane reforming reaction using carbon dioxide shows higher conversion as the temperature increases, the reaction must be performed at a high temperature to obtain a high-purity product; however, when a catalyst is generally exposed to a high temperature for a long time, there is a problem that the active metal is sintered, causing the surface exhibiting activity to decrease, or a by-product, carbon (for example, coke), covers the surface of the active metal, whereby the activity decreases over time. Accordingly, to minimize side reactions and sintering, a method of using a precious metal has been considered, but for economic reasons, a catalyst to replace the precious metal is needed.

To this end, a manufacturing method of a catalyst using nickel and molybdenum as active materials on an MgO support by an impregnation method has been developed, but there is still a problem of a decrease in the active surface due to calcination and coke deposition.

### [DETAILED DESCRIPTION OF THE INVENTION]

### [Technical Problem]

In the present invention, there are provided a catalyst for methane reforming and manufacturing method thereof. Specifically, the present invention provides a highly-dispersed nickel catalyst with ensured structural stability and a manufacturing method thereof, which may be used in a methane reforming reaction using carbon dioxide.

### [Technical Solution]

According to one embodiment of the present invention, a catalyst comprises aluminum (Al), nickel (Ni), and magnesium (Mg), and an Al content is 5 mol parts to 50 mol parts based on 100 mol parts of Mg.

In another embodiment of the present invention, a manufacturing method of a catalyst comprises: preparing an aqueous solution mixture by mixing MgO, a nickel (Ni) precursor and aluminum (Al) precursor (step 1); hydrothermally synthesizing the mixture of step 1 (step 2); and drying and calcining the hydrothermally synthesized composition of step 2 (step 3), wherein in step 1, the Al precursor is mixed in an amount such that an Al content is 5 mol parts to 50 mol parts based on 100 mol parts of Mg.

### [ADVANTAGEOUS EFFECTS]

According to the present invention, a nickel catalyst may be provided in which nickel is highly dispersed and excellent structural stability is achieved during a methane reforming reaction, whereby sintering and coke deposition are suppressed in a methane reforming reaction using carbon dioxide, which thus exhibits excellent catalytic performance.

### [Brief description of the drawing]

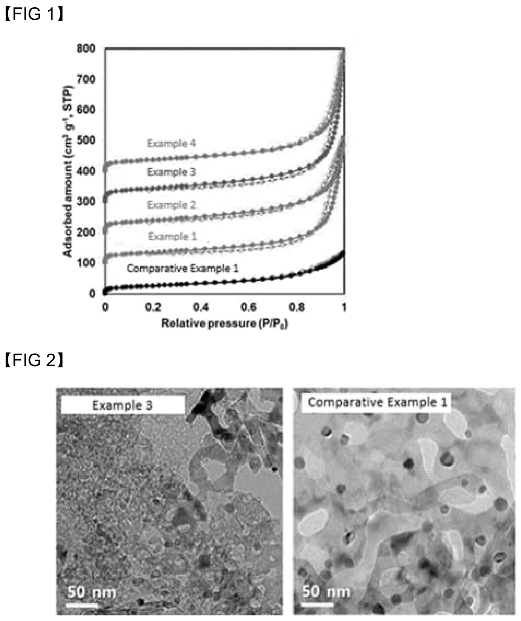

FIG. 1 illustrates the results of performing a nitrogen adsorption analysis of Examples 1 to 4 and Comparative Example 1 of the present disclosure.
FIG. 2 illustrates the TEM image results of Example 3 and Comparative Example 1 of the present disclosure after a methane reforming reaction.

### [DETAILED DESCRIPTION OF THE EMBODIMENTS]

The terminology used herein is for the purpose of describing particular embodiments only and is not intended to limit the invention. The singular forms are intended to include the plural forms as well, unless the context clearly indicates otherwise.

It will be further understood that the terms "include", "have", or "possess" when used in this specification, specify the presence of stated features, steps, components, or combinations thereof, but do not preclude the presence or addition of one or more other features, steps, components, or combinations thereof.

As the present invention may be variously modified and have various forms, specific embodiments thereof are shown by way of examples and will be described in detail. However, it is not intended to limit the present invention to the particular form disclosed and it should be understood that the present invention includes all modifications, equivalents, and replacements within the idea and technical scope of the present invention.

Hereinafter, the present invention will be described in detail.

In a conventional methane reforming reaction using carbon dioxide, it is known that a Ni-MgO catalyst has high activity, but there was a problem in that deactivation proceeds rapidly under high-temperature reaction conditions due to sintering of metal particles and coke deposition (coke formation).

Accordingly, a method using hydrothermal synthesis has been proposed. A Ni-MgO catalyst manufactured by hydrothermal synthesis had the advantage that it achieves high dispersion of nickel (Ni), and coke deposition is suppressed during the reaction compared to catalysts manufactured by other synthesis methods (e.g., impregnation method, co-precipitation method, etc.). However, there is still a problem in that structural stability is significantly reduced due to the sintering of the MgO support under high-temperature reaction conditions.

To overcome these issues, a bimetallic element (aluminum, Al) was introduced in the hydrothermal synthesis process of the Ni-MgO catalyst in order to prepare a catalyst with improved structural stability. The catalyst of the present disclosure achieves excellent structural stability during a methane reforming reaction compared to conventionally known Ni-MgO (hydrothermal synthesis method) and Ni-MgAl₂O₄ (co-precipitation method) catalysts, and thus exhibits excellent catalytic performance in a methane reforming reaction using carbon dioxide.

According to one embodiment of the present disclosure, the catalyst comprises aluminum (Al), nickel (Ni), and magnesium (Mg), and the Al content may be 5 mol parts to 50 mol parts based on 100 mol parts of Mg. Specifically, based on 100 mol parts of Mg, the Al content may be 5 parts by mole or more, or 10 parts by mole or more, and 50 parts by mole or less, 40 parts by mole or less, 30 parts by mole or less, or 20 parts by mole or less.

When the aluminum (Al) content satisfies the above range, the structural stability of the catalyst in the methane reforming reaction process may be secured, which is intended to be achieved in the present disclosure, and the aluminum may be highly dispersed into the lattice of the MgO support to form a solid solution.

In conventional catalysts for methane reforming including nickel (Ni) on alumina (Al₂O₃), acid sites exists on the alumina, which induces coke deposition, i.e., coking, on the catalyst surface during a reforming reaction, leading to a problem of decreased catalyst activity during the reaction. When the aluminum content is too high, an Al₂O₃ crystal structure is formed on the catalyst surface, which promotes coke formation during the reforming reaction, resulting in a significant reduction in catalytic activity

The magnesium (Mg) in the catalyst for methane reforming may be present in the form of MgO (magnesium oxide) as a support. Specifically, in one embodiment of the present invention, the catalyst may be in a form where aluminum (Al) and nickel (Ni) are dispersed on an atomic unit basis on MgO.

The nickel (Ni) content may be 2 parts by weight to 10 parts by weight based on 100 parts by weight of the catalyst for methane reforming. Specifically, the Ni content may be 2 parts by weight or more, 3 parts by weight or more, 4 parts by weight or more, or 5 parts by weight or more, and 10 parts by weight or less, 9 parts by weight or less, 8 parts by weight or less, 7 parts by weight or less, or 6 parts by weight or less, based on the total weight of the catalyst.

When the nickel (Ni) content satisfies the above range, the formation of excessively large nickel particles, which promotes coke formation, is suppressed, thereby preventing adverse effects on the catalyst activity, and a sufficient amount of nickel active phase required for the methane reforming reaction may be secured.

If the nickel (Ni) content is too excessive, nickel forms large particles that promote coke formation, leading to a significant reduction in the catalyst activity, and if the nickel (Ni) content is too small, the amount of nickel active phase required for the reaction is insufficient, so there may be a problem in that catalyst activity is not secured.

In one embodiment of the present disclosure, the catalyst may comprise MgO as the support for the remainder except for the aluminum (Al) content and nickel (Ni) content based on total weight of the catalyst.

Specifically, the catalyst according to one embodiment of the present disclosure may include only aluminum (Al), nickel (Ni), and magnesium (Mg) as metal elements.

Furthermore, in the case of a conventional catalyst for methane reforming comprising nickel (Ni) on an alumina (Al₂O₃) support, acid sites (acid point) are present on the alumina, which induce coke deposition, that is, coking, on the catalyst surface during the reforming reaction, thereby causing a problem in that the catalytic activity decreases during the reaction. However, the catalyst of the present disclosure comprises MgO instead of comprising alumina. Compared to alumina, MgO has very few acid sites, that is, it may be considered to have no acid sites, and accordingly, it has an advantage in that coking occurs relatively less, thereby maintaining catalytic activity. In addition, MgO has excellent basicity and thus has excellent adsorption of reactants, resulting in good reactivity. However, when manufactured by the conventional impregnation method, there is a problem of low nickel dispersion and small surface area; therefore, the present disclosure provides a manufacturing method including hydrothermal synthesis.

The catalyst may have an N₂ cumulative adsorption pore volume of 0.20 to 0.50 cm³/g as measured by the nitrogen adsorption method. Specifically, the N₂ cumulative adsorption pore volume may be from 0.20 cm³/g or more, 0.25 cm³/g or more, 0.27 cm³/g or more, or 0.28 cm³/g or more, and 0.50 cm³/g or less, 0.45 cm³/g or less, 0.40 cm³/g or less, 0.35 cm³/g or less, or 0.30 cm³/g or less.

When the pore volume range of the catalyst satisfies the above range, a desired level of a fast methane reforming reaction rate may be obtained, and deactivation by coke formation may be suppressed.

Furthermore, the catalyst manufactured by the manufacturing method of the present invention has a larger pore volume compared to one manufactured by the conventional impregnation method. That is, the catalyst of the present invention has an increased surface area due to pore formation, and thus the reforming reaction rate is expected to be faster compared to one manufactured by the impregnation method.

The catalyst may have a nickel (Ni) nanoparticle size of 3.0 to 8.0 nm after reduction. Since crystallization of nickel (Ni) is not observed when only the calcination step is performed in the manufacturing method of the catalyst of the present invention, the size of the nickel (Ni) nanoparticles may be observed by reducing the catalyst in a hydrogen atmosphere to confirm structural stability before and after the methane reforming reaction. In the case of a catalyst manufactured by the impregnation method, the size of nickel (Ni) nanoparticles may be 10 to 50 nm.

When nickel (Ni) forms large particles, this promotes coke formation during the reforming reaction, and thus the catalytic activity may be significantly decreased. In the present invention, since nickel (Ni) is highly dispersed on the MgO at an atomic level, thereby making it possible to achieve high efficiency, thus even when used in a high-temperature methane reforming reaction using carbon dioxide, a decrease in catalytic efficacy due to sintering of the catalyst or deposition of coke on the catalyst surface does not occur.

The MgO raw material may be mixed with the aluminum (Al) precursor and the nickel (Ni) precursor in an aqueous solution state to react at a high temperature, whereby pores may be formed.

Similarly, to the N₂ cumulative adsorption pore volume, the catalyst hydrothermally synthesized according to the present invention has a larger BET specific surface area measured by a nitrogen adsorption method than that of a catalyst manufactured by an impregnation method, it is expected that the number of active sites of the catalyst increases, and thus the reforming reaction rate will be fast.

The catalyst may have a BET specific surface area of 100 to 200 m²/g as measured by a nitrogen adsorption method. This is in the same context as that pores are formed in the MgO raw material, resulting in a large N₂ cumulative adsorption pore volume.

Specifically, the BET specific surface area of the catalyst may be 100 m²/g or more, 110 m²/g or more, 115 m²/g or more, 120 m²/g or more, 125 m²/g or more, or 130 m²/g or more and 200 m²/g or less, 190 m²/g or less, 180 m²/g or less, 170 m²/g or less, 160 m²/g or less, or 155 m²/g or less.

The catalyst may be one used for a methane reforming reaction using carbon dioxide. As described above, the catalyst according to an embodiment of the present invention, due to a high BET specific surface area resulting from the high dispersion of nickel (Ni) and a porous structure, may have a fast methane reforming processing rate and high processing capacity when used in a methane reforming reaction using carbon dioxide, which is performed at a high temperature. Additionally, it has the advantages that there is little or no sintering of the catalyst as the reaction progresses, and the amount of coke deposition is small, so the catalyst efficiency does not decrease during the reaction.

The catalyst for methane reforming of the present invention has excellent structural stability because a bimetallic element (aluminum, Al) is introduced during the hydrothermal synthesis process of a Ni-MgO catalyst. Accordingly, compared to a conventional Ni-MgO catalyst manufactured by hydrothermal synthesis without the introduction of a bimetallic element, the catalyst of the present invention, into which the bimetallic element (aluminum, Al) is introduced, has a smaller reduction rate of BET specific surface area and a smaller reduction rate of N₂ cumulative adsorption pore volume before and after the methane reforming reaction for 24 hours.

This is because aluminum (Al), which is the bimetallic element, is highly dispersed in the MgO support lattice to form a solid solution, and this increases the lattice energy compared to a conventional Ni-MgO catalyst without an introduced bimetallic element, thereby improving the structural stability of the catalyst before and after the reforming reaction.

Furthermore, an embodiment of the present invention provides a manufacturing method of a catalyst, comprising: preparing an aqueous solution mixture by mixing MgO, a nickel (Ni) precursor and aluminum (Al) precursor (step 1); hydrothermally synthesizing the mixture of step 1 (step 2); and drying and calcining the hydrothermally synthesized composition of Step 2 (step 3).

In step 1, the aluminum (Al) precursor may be mixed in an amount such that the Al content is 5 parts by mole to 50 parts by mole based on 100 mol parts of Mg. That is, the aluminum (Al) precursor may be added in an amount such that the Al content in the final product, the catalyst, is in the range of 5 parts by mole to 50 parts by mole based on 100 mol parts of Mg. Specifically, the aluminum (Al) precursor may be mixed in an amount such that the Al content is 5 parts by mole or more, or 10 parts by mole or more, and 50 parts by mole or less, 40 parts by mole or less, 30 parts by mole or less, or 20 parts by mole or less, based on 100 mol part of Mg.

When the content of the aluminum (Al) precursor satisfies the above range, the structural stability of the catalyst during the methane reforming reaction, which is intended to be achieved in the present disclosure, may be secured, and aluminum may be highly dispersed in the MgO support lattice to form a solid solution. If the aluminum content is too low, it is difficult to maintain the stability of the MgO support before and after the methane reforming reaction, and if the aluminum content is too high, a non-uniform Al₂O₃ or MgAl₂O₄ crystalline phase may be formed on the catalyst surface, promoting coke formation during the reaction and thereby reducing the catalyst activity.

In step 1, the nickel (Ni) precursor may be mixed in an amount such that the Ni content is 2 parts by weight to 10 parts by weight based on 100 parts by weight of the catalyst. That is, the nickel (Ni) precursor may be added in an amount such that the nickel (Ni) content in the final product, the catalyst, is in the range of 2 to 10 parts by weight based on 100 parts by weight of the catalyst. Specifically, the nickel (Ni) precursor may be mixed in an amount such that the nickel (Ni) content is 2 parts by weight or more, 3 parts by weight or more, 4 parts by weight or more, or 5 parts by weight or more and 10 parts by weight or less, 9 parts by weight or less, 8 parts by weight or less, 7 parts by weight or less, or 6 parts by weight or less, based on 100 parts by weight of the catalyst.

When the content of the nickel (Ni) precursor satisfies the above range, the formation of excessively large nickel particles, which promotes coke formation, is suppressed, thereby preventing an adverse effect on catalyst activity, and a sufficient amount of nickel active phase required for the methane reforming reaction may be secured.

The aluminum (Al) precursor of step 1 is at least one selected from the group consisting of Al(NO₃)₃·9H₂O, AlCl₃·xH₂O, Al(OH)₃·xH₂O, Al₂(SO₄)₃·xH₂O, Al₂(SO₄)₃, AlNH₄(SO₄)₂·12H₂O, AlCl₃·6H₂O, AlCl₃, AlBr₃, AlO₄P, AlI₃, AlF₃, Al(OH)₃, Al₂(SO₄)₃, Al₂S₃, AIN, Al(C₅H₇O₂)₃, Al(OC₂H₅)₃, and Al[OCH(CH₃)₂]₃. Specifically, the aluminum (Al) precursor of step 1 may be Al(NO₃)₃·9H₂O.

The nickel (Ni) precursor of step 1 is at least one selected from the group consisting of Ni(CH₃COO)₂·4H₂O), NiCl₂, NiCl₂·6H₂O, Ni(NO₃)₂, NiSO₄, (NH₄)₂Ni(SO₄)₂·6H₂O, NiBr₂, NiCO₃, NiF₂, NiI₂, NiC₂O₄·2H₂O and Ni(ClO₄)₂·6H₂O. Specifically, the nickel (Ni) precursor of step 1 may be Ni(CH₃COO)₂·4H₂O).

The hydrothermal synthesis of step 2 may be performed at a temperature of 100 to 300°C for 12 to 48 hours. Specifically, the hydrothermal synthesis may be performed at a temperature of 100°C or more, 110°C or more, 120°C or more, or 150°C or more and 300°C or less, 250°C or less, or 200°C or less.

Hydrothermal synthesis is a method of synthesizing a substance using an aqueous solution under high temperature and high pressure, in which the substance synthesis is performed by heat treatment at a temperature above the boiling point of a commonly used solvent, and it is a single crystal synthesis method that depends on the solubility of the substance. In hydrothermal synthesis, particles are highly dispersed in a solution, and thus the method may be adopted to prepare a solid solution in which Ni is uniformly dispersed on MgO, as in the present invention. In the present invention, in the synthesis step, the aqueous solution mixture of MgO and the nickel (Ni) precursor reacts, such that nickel (Ni) is highly dispersed on MgO to form a solid solution, and MgO forms pores, thereby increasing the BET specific surface area.

Specifically, the hydrothermal synthesis of the present invention may be performed at a temperature of 120 to 200°C for 22 to 26 hours.

The mixture synthesized in step 2 may undergo the drying and calcination steps of step 3.

The drying of Step 3 may be performed at 50 to 150°C for 2 to 24 hours, and specifically at 70 to 110°C for 10 to 16 hours.

The calcination of Step 3 may be performed at 600 to 1000°C for 2 to 6 hours, and specifically at 700 to 900°C for 3 to 5 hours.

As described in the catalyst section above, the manufacturing method of a catalyst of the present invention is characterized in that by using hydrothermal synthesis, compared to a manufacturing method using an impregnation method as in the prior art, the manufactured catalyst does not undergo sintering even in a high-temperature reforming reaction, there is no coke deposition on the surface so that catalyst activity is maintained, and structural stability is maintained even when a methane reforming reaction is performed.

Hereinafter, the present invention will be described in more detail by way of the following experimental examples. However, the following experimental examples are for illustrative purposes only, and the scope of the present invention is not limited thereto.

### [Experimental Example]

### <Example 1>

A Ni-Al-MgO catalyst was to be manufactured using a nickel (Ni) precursor, an aluminum (Al) precursor, and an MgO raw material.

First, an MgO aqueous suspension was manufactured by adding 4 g of magnesium oxide [MgO] to 140 mL of distilled water and stirring at 500 rpm at room temperature.

At the same time, a nickel (Ni) precursor aqueous solution was manufactured by adding 0.893 g of nickel acetate tetrahydrate [Ni(CH₃COO)₂·4H₂O] to 20 mL of distilled water and dissolving it by stirring, wherein the amount of the nickel (Ni) precursor was controlled such that the nickel (Ni) content was 5 parts by weight based on 100 parts by weight of the methane reforming catalyst.

Subsequently, 1.899 g of aluminum nitrate nonahydrate [Al(NO₃)₃·9H₂O] was added to the nickel (Ni) precursor aqueous solution and dissolved by stirring, wherein the amount of the aluminum (Al) precursor was controlled such that the Al content was 5 mol parts based on 100 mol parts of Mg in the catalyst.

Thereafter, the nickel (Ni) and aluminum (Al) precursor solution were added dropwise to the MgO suspension under stirring using a pipette, and the resulting mixture was stirred at the same speed at room temperature for 2 hours. The stirred suspension was subjected to hydrothermal synthesis at 200 °C for 24 hours in a Teflon-lined autoclave.

The obtained suspension was filtered and washed 4 times with distilled water using a filtration apparatus, and then dried at 100 °C for 12 hours to remove moisture. The dried sample was calcined at 800 °C (heating rate: 2 °C/min) in air for 4 hours.

### <Example 2>

Example 2 was performed in the same manner as in Example 1, except that 3.799 g of aluminum nitrate nonahydrate [Al(NO₃)₃·9H₂O] was used such that the Al content was 10 mol parts based on 100 mol parts of Mg in the catalyst.

### <Example 3>

Example 3 was performed in the same manner as in Example 1, except that 7.598 g of aluminum nitrate nonahydrate [Al(NO₃)₃·9H₂O] was used such that the Al content was 20 mol parts based on 100 mol parts of Mg in the catalyst.

### <Example 4>

Example 4 was performed in the same manner as in Example 1, except that 11.398 g of aluminum nitrate nonahydrate [Al(NO₃)₃·9H₂O] was used such that the Al content was 30 mol parts based on 100 mol parts of Mg in the catalyst.

### <Comparative Example 1>

Comparative Example 1 was performed in the same manner as in Example 1, except that aluminum nitrate nonahydrate [Al(NO3)3·9H2O] was not used.

### <Comparative Example 2>

In a different manner from the Examples, a Ni-MgAl₂O₄ spinel catalyst was manufactured using a co-precipitation method as follows. 0.478 g of nickel nitrate hexahydrate [Ni(NO₃)₂·6H₂O], 3.84 g of magnesium nitrate hexahydrate [Mg(NO₃)₂·6H₂O], and 10 g of aluminum nitrate nonahydrate [Al(NO₃)₃·9H₂O] were added to 200 mL of distilled water and dissolved with stirring, such that the content of Ni was 5 parts by weight based on 100 parts by weight of the catalyst, and the content of Al was 200 mol parts based on 100 mol parts of Mg. Thereafter, aqueous ammonia [NH₄OH] was added dropwise to the solution under stirring using a pipette until the pH reached 10. The precipitated sample was filtered, dried, and calcined in the same manner as in Example 1.

### <Comparative Example 3>

In a different manner from Comparative Example 2, a Ni-MgAl₂O₄ catalyst was manufactured using an impregnation method(recipitation) as follows. 0.979 g of nickel nitrate hexahydrate [Ni(NO₃)₂·6H₂O] was added to 0.5 mL of distilled water and dissolved by performing sonication until it became a transparent dark green solution, such that the content of Ni was 5 parts by weight based on 100 parts by weight of the catalyst. Thereafter, the nickel (Ni) precursor solution was impregnated onto 4 g of MgAl₂O₄ using the impregnation method, and the impregnated sample was dried and calcined in the same manner as in Example 1.

### <Experimental Example 1>

To determine the specific surface area and pore structure of the catalysts of the Examples and Comparative Examples, a nitrogen adsorption analysis was performed using a Tristar 2 3020 instrument. Before the nitrogen adsorption analysis, the samples were pretreated for 8 hours at 150 °C under vacuum.

The BET specific surface area was calculated through the following equation. In the graph of Adsorbed amount(v)/P/P₀(A), when the y-axis is plotted as 1/v(1-A) and x-axis is plotted as A in the range of 0.15<A<0.3, the slope is 1/vm. The vm represents the volume of N₂ molecules covering the surface of the catalyst. Since each N₂ molecule occupies 0.162 nm, and the BET specific surface area S was calculated by S=(vm x N x s)/mv, where N is Avogadro's number (6.02*10²³), s is the cross-section area of 0.162 nm², and mv is the molar volume per mole of gas molecules.

N₂ cumulative adsorption pore volume, i.e., the total pore volume, was calculated from the following equation. When the value of Adsorbed amount of part where the value of P/P₀(A) is 0.99 is B, the pore volume was determined by B x density per mass of liquid nitrogen / molar volume x Avogadro's number.

The BET specific surface area and N₂ cumulative adsorption pore volume values are shown in Table 1 below.

### <Experimental Example 2>

To confirm the activity and stability of the Examples and Comparative Examples, a methane reforming reaction using carbon dioxide was conducted. Specifically, first, 0.08 g of catalyst particles (200-300 µm) were loaded into a cylindrical quartz reactor (inner diameter: 10 mm), and the catalyst was reduced by heating to 800 °C (heating rate: 10 °C/min) under a 100% hydrogen atmosphere. Subsequently, the hydrogen atmosphere was maintained for 2 hours, followed by purging in a nitrogen atmosphere for 30 minutes. And then a methane-carbon dioxide mixed gas was introduced together with nitrogen gas as an internal standard gas so that the concentration of the mixed gas constituted 90% of the total feed gas flow rate (45.5 kPa CH₄; 45.5 kPa CO₂; 9.1 kPa N₂). The Gas Hourly Space Velocity (GHSV) based on the reactants was fixed at 60 L/gh, and the methane reforming reaction using carbon dioxide was conducted for 24 hours, and the products (H₂, CO) and residual reactants (CH₄, CO₂) were quantified using a gas chromatography (GC) equipped with a TCD detector and a carboxen-1000 column. And the results are shown in Table 1 below.

The methane reforming reaction using carbon dioxide was conducted for 24 hours at a temperature of 800 °C. The CH₄ and CO₂ conversion rates were calculated using the equation: Conversion rate = GHSV x reactant concentration x conversion ratio. After the 24-hour reaction, the amount of coke deposition on the catalyst was measured through Elemental Analysis.

**[Table 1]**

| Category | unit | Exampl e 1 | Exampl e 2 | Exampl e 3 | Exampl e 4 | Comparativ e Example 1 | Comparativ e Example 2 | Comparativ e Example 3 |
|---|---|---|---|---|---|---|---|---|
| Ni content (based on 100 parts by weight of the catalyst) | parts by weight | 5 | 5 | 5 | 5 | 5 | 5 | 5 |
| Al content (based on 100 mol parts of Mg) | mol parts | 5 | 10 | 20 | 30 | 0 | 200 | 200 |
| CH₄ conversion rate (Initial reaction, 0 h) | L/g·h | 25.0 | 25.1 | 25.0 | 24.9 | 24.6 | 24.5 | 23.8 |
| CO₂ conversion rate (Initial reaction, 0 h) | L/g·h | 25.6 | 25.7 | 25.9 | 25.8 | 24.8 | 24.8 | 24.0 |
| CH₄ conversio n rate (after 24 h of reaction) | L/g·h | 25.1 | 25.2 | 25.3 | 25.0 | 24.4 | 24.2 | 23.5 |
| CO₂ conversio n rate (after 24 h of reaction) | L/g·h | 25.7 | 25.8 | 26.0 | 25.9 | 24.7 | 24.9 | 23.7 |
| Total CH₄ converted amound | L/g | 601.2 | 603.6 | 603.6 | 598.8 | 588.0 | 584.4 | 567.6 |
| Total CO₂ converted amound | L/g | 615.6 | 618.0 | 622.8 | 620.4 | 594.0 | 596.4 | 572.4 |
| BET specific surface area (before reaction) | m²/g | 118 | 133 | 152 | 128 | 91 | 79 | 53 |
| Total pore volume (before reaction) | cm³/g | 0.277 | 0.256 | 0.297 | 0.274 | 0.165 | 0.147 | 0.115 |
| BET specific surface area (after 24 h of reaction) | m²/g | 82 | 91 | 98 | 84 | 48 | 71 | 39 |
| Total pore volume (after 24 h of reaction) | cm³/g | 0.158 | 0.174 | 0.196 | 0.141 | 0.076 | 0.131 | 0.101 |
| Ni crystallite size (before 24 h of reaction, after hydrogen reduction) | nm | 5.1 | 5.0 | 5.1 | 5.2 | 5.3 | 11.8 | 10.7 |
| Ni crystallite size (after 24 h of reaction) | nm | 10.4 | 9.8 | 8.5 | 11.3 | 14.3 | 12.5 | 20.3 |
| amount of coke deposition (after 24 h of reaction) | wt% | 0.84 | 0.75 | 0.62 | 0.81 | 0.91 | 1.14 | 2.51 |

As a result of the reaction conducted for 24 hours, the CH₄ conversion rate of the Examples after 24 hours was 25.0 to 25.3 L/g·h, and the CO₂ conversion rate were 25.7 to 26.0 L/g·h, indicating higher catalytic activity compared to the Comparative Examples. In addition, the amount of coke deposition of the Examples after 24 hours was 0.6 to 0.8 wt%, which was less than that of the Comparative Examples.

The BET specific surface area of the Examples was 110 to 160 m²/g, and the N₂ cumulative adsorption pore volume (i.e., total pore volume) was 0.25 to 0.30 cm³/g, confirming that the Examples had a larger specific surface area and larger pore volume compared to the Comparative Examples. After the methane reforming reaction for 24 hours at 800 °C, the BET specific surface area of the Examples was 80 to 100 m²/g, and the N₂ cumulative adsorption pore volume (i.e., total pore volume) was 0.14 to 0.20 cm³/g, demonstrating that the larger surface area and pore structure were retained relative to those of the Comparative Examples.

Furthermore, on the TEM image after reaction, the size of the Ni nanoparticles in the Examples was 8 to 12 nm, which was smaller than that observed in the Comparative Examples. Specifically, when comparing the Examples in which bimetallic element aluminum (Al) was introduced with Comparative Example 1, which differs only in that the bimetallic element was not introduced, the nickel (Ni) nanoparticle size in the Examples increases by about 60 to 120% after the reforming reaction compared to the size before the reforming reaction, whereas it was confirmed that for Comparative Example 1, the Ni nanoparticle size after the reforming reaction increased by about 180% compared to before the reaction.

As a result, it was confirmed that Examples 1 to 4 enabled higher activity and greater structural stability compared to the Comparative Examples.

## Claims

1. A catalyst for methane reforming comprising aluminum (Al), nickel (Ni), and magnesium (Mg),
and an Al content is 5 mol parts to 50 mol parts based on 100 mol parts of Mg.

2. The catalyst of claim 1,
wherein the magnesium (Mg) in the catalyst for methane reforming is present in a form of MgO as a support.

3. The catalyst of claim 1,
wherein a Ni content is 2 parts by weight to 10 parts by weight based on 100 parts by weight of the catalyst for methane reforming.

4. The catalyst of claim 1,
wherein the catalyst for methane reforming has a BET specific surface area of 100 m²/g to 200 m²/g measured by a nitrogen adsorption method.

5. The catalyst of claim 1,
wherein the catalyst for methane reforming has a N₂ cumulative adsorption pore volume of 0.20 cm³/g to 0.50 cm³/g measured by a nitrogen adsorption method.

6. The catalyst of claim 1,
wherein the catalyst is used for a methane reforming reaction using carbon dioxide.

7. A manufacturing method of a catalyst for methane reforming, comprising:
preparing an aqueous solution mixture by mixing MgO, a nickel (Ni) precursor and aluminum (Al) precursor (step 1);
hydrothermally synthesizing the mixture of step 1 (step 2); and
drying and calcining the hydrothermally synthesized composition of step 2 (step 3);
wherein in step 1, the Al precursor is mixed in an amount such that an Al content is 5 mol parts to 50 mol parts based on 100 mol parts of Mg.

8. The manufacturing method of claim 7,
wherein in step 1, the Ni precursor is mixed in an amount such that a Ni content is 2 parts of weight to 10 parts of weight based on 100 parts by weight of the catalyst for methane reforming.

9. The manufacturing method of claim 7,
wherein the aluminum (Al) precursor of step 1 is at least one selected from the group consisting of Al(NO₃)₃·9H₂O, AlCl₃·xH₂O, Al(OH)₃·xH₂O, Al₂(SO₄)₃·xH₂O, Al₂(SO₄)₃, AlNH₄(SO₄)₂·12H₂O, AlCl₃·6H₂O, AlCl₃, AlBr₃, AlO₄P, AlI₃, AlF₃, Al(OH)₃, Al₂(SO₄)₃, Al₂S₃, AIN, Al(C₅H₇O₂)₃, Al(OC₂H₅)₃, and Al[OCH(CH₃)₂]₃.

10. The manufacturing method of claim 7,
wherein the nickel (Ni) precursor of step 1 is at least one selected from the group consisting of Ni(CH₃COO)₂·4H₂O), NiCl₂, NiCl₂·6H₂O, Ni(NO₃)₂, NiSO₄, (NH₄)₂Ni(SO₄)₂·6H₂O, NiBr₂, NiCO₃, NiF₂, NiI₂, NiC₂O₄·2H₂O and Ni(ClO₄)₂·6H₂O.

11. The method of claim 7,
wherein the hydrothermal synthesis of step 2 is performed at a temperature of 100 °C to 300 °C for 12 hours to 48 hours.

12. The manufacturing method of claim 7,
wherein the drying of step 3 is performed at 50 °C to 150 °C for 2 hours to 24 hours.

13. The manufacturing method of claim 7,
wherein the calcining of step 3 is performed at 600 °C to 1000 °C for 2 hours to 6 hours.
